(19) Europäisches Patentamt
European Patent Office
Office européen des brevets

(11) Veröffentlichungsnummer : **0 010 747**
**B1**

(12) **EUROPÄISCHE PATENTSCHRIFT**

(45) Veröffentlichungstag der Patentschrift :
22.09.82

(51) Int. Cl.$^3$ : **B 01 D 33/04**, C 02 F 11/12

(21) Anmeldenummer : 79104163.5

(22) Anmeldetag : 27.10.79

(54) Vorrichtung zum Filtern von Feststoffe enthaltenden Flüssigkeiten.

(30) Priorität : 02.11.78 DE 2847503

(43) Veröffentlichungstag der Anmeldung :
14.05.80 (Patentblatt 80/10)

(45) Bekanntmachung des Hinweises auf die Patenterteilung : 22.09.82 Patentblatt 82/38

(84) Benannte Vertragsstaaten :
AT BE DE FR GB IT NL SE

(56) Entgegenhaltungen :
DE A 2 050 503
DE B 1 265 454
GB A 532 750
US A 1 663 298
US A 3 703 963

(73) Patentinhaber : Gerlach, Günter
In den Wiesen 8
D-2148 Zeven (DE)

(72) Erfinder : Gerlach, Günter
In den Wiesen 8
D-2148 Zeven (DE)

(74) Vertreter : Bolte, Erich, Dipl.-Ing. et al
Patentanwälte Dipl.-Ing. Hans Meissner Dipl.-Ing.
Erich Bolte Holleraliee 73
D-2800 Bremen 1 (DE)

# Vorrichtung zum Filtern von Feststoffe enthaltenden Flüssigkeiten

## Beschreibung

Die Erfindung betrifft eine Vorrichtung zum Filtern von Feststoffe enthaltenden Flüssigkeiten, insbesondere zum Filtern von Wasser eines Schwemmstroms für den Transport von Zuckerrüben in einer Rübenzuckerfabrik, mit einem endlosen, umlaufenden Filterband mit Sieb- bzw. Filteröffnungen, dessen Obertrum als Siebfläche dient, und mit einer dem Obertrum nachgeordneten Filterband-Reinigungsstation, in deren Bereich das Filterband unter Aufweiten der Sieb- bzw. Filteröffnungen dehnbar ist.

Rübenzuckerfabriken sind überwiegend so eingerichtet, daß die durch die Landwirtschaft angelieferten Zuckerrüben in einem System von Kanälen durch einen wasserführenden Schwemmstrom auf dem Betriebsgelände der Fabrik gefördert werden. Die Zuckerrüben gelangen mit allen Fremdkörpern, also Rübenblättern, Unkraut, Sand, Steinen etc. in diesen Schwemmstrom. Die unerwünschten Bestandteile und Fremdkörper werden während des Transportes der Zuckerrüben von diesen abgesondert und in entsprechenden Stationen aus dem Schwemmstrom entfernt. Das Wasser des Schwemmstroms wird schließlich — nach Entnahme der zu verarbeitenden Zuckerrüben — einem Klärbecken zugeführt. In diesem wird das Wasser so weit geklärt, daß es unter Bildung eines geschlossenen Kreislaufs in den Schwemmstrom zurückgegeben werden kann.

Dem Klärbecken als Endstufe der Wasserreinigung sind gewöhnlich ein Sandfänger und ein Filter vorgeordnet. Letzterer dient der Absonderung von besonders feinen Feststoffanteilen, und zwar vor allem auch organischer Bestandteile, aus dem Wasser.

Mit der Verbesserung der letztgenannten Einrichtung befaßt sich die vorliegende Erfindung. Dabei geht es vornehmlich darum, den Wirkungsgrad der Filtereinrichtung in möglichst einfacher Weise durch Vermeidung des Dichtsetzens der Filteröffnungen des Filterbandes zu erhöhen.

Der GB-A-532 750 kann entnommen werden, zur Verbesserung der Reinigung und damit der Filterleistung des Filterbandes dieses im Bereich der Reinigungsstation unter Aufweiten der Sieb- bzw. Filteröffnungen zu dehnen. Dies erfolgt bei der bekannten Konstruktion derart, daß das Filterband durch gegenüber den übrigen Umlenkwalzen wesentlich schneller angetriebene Streckwalzen in Längsrichtung gedehnt wird. Die Sieb- bzw. Filteröffnungen werden dabei zwischen zwei Streckwalzenpaaren in Förderrichtung des Filterbandes aufgeweitet bzw. gestreckt. Zusätzlich erfolgt in der Reinigungsstation eine Berieselung des Filterbandes mit einer Reinigungsflüssigkeit.

In der GB-A-532 750 ist auch vorgeschlagen, das Filterband in der Reinigungsstation gleichzeitig in Querrichtung mittels eines Spannrahmens zu dehnen, so daß in der Reinigungsstation eine Aufweitung der Sieb- bzw. Filteröffnungen sowohl in Längs- als auch in Querrichtung des Filterbandes erhalten wird.

Nachteilig bei der bekannten Konstruktion ist, daß für die Streckwalzen entweder gesonderte Antriebe oder zumindest ein zusätzliches Getriebe erforderlich sind. Ferner muß ein spezieller Spannrahmen für die Querdehnung des Filterbandes vorgesehen werden. Die bekannte Konstruktion ist daher relativ aufwendig.

Die zusätzliche Reinigung durch eine Reinigungsflüssigkeit ist ebenfalls von einem gewissen Aufwand begleitet, da ein zusätzlicher Flüssigkeitskreislauf mit Pumpen, Auffangbecken, Sieben, Filter erforderlich ist.

Aus der DE-B-1 285 454 ist eine sogenannte « Kuchenabnahme-vorrichtung für Trommelfilter mit ablaufendem Filtertuch » bekannt, bei der das Filtertuch bzw. Filterband über Walzen geführt ist, von denen eine Erhöhungen zum « Auf- bzw. Abplatzen » des Filterkuchens aufweist. Die Erhöhungen haben jeweils einen sinusförmigen Verlauf, wobei sie im Tal der Sinuskurve auf dem Walzenmantel der Umlenkwalze aufliegen und sich bis zum Erreichen des oberen Scheitels der Sinuskurve vom Mantel entfernen. Die Anordnung der Erhöhungen ist dabei so gewählt, daß das Filtertuch immer nur an einzelnen Punkten gedehnt wird, und daß diese Punkte im Verlauf einer Umdrehung der Umlenkwalze über die Breite der Walze bzw. über die Breite einer Sinuskurve « wandert ». Dadurch soll erreicht werden, daß der Filterkuchen nicht mehr parallel zu der Walzenachse aufgerissen wird, sondern daß eine Art Craqueléerisse entsteht. Die DE-B-1 285 454 vermittelt also die Lehre, auf einer Umlenkwalze Erhöhungen so anzubringen, daß der « Dehnpunkt » während einer Walzenumdrehung parallel zur Walzenachse wandert und daß nur so ein Zerbrechen des Filterkuchens in kleine Stückchen erreichbar ist.

Ferner ist auch bei der bekannten Konstruktion gemäß der DE-B-1 285 454 noch eine zusätzliche Reinigung des Filtertuches durch Waschdüsen vorgesehen mit dem bereits erwähnten Nachteil, daß ein zusätzlicher Kreislauf für die Reinigungsbzw. Waschflüssigkeit mit Pumpe, Filter etc. erforderlich ist. Die bekannte Konstruktion gemäß der DE-B-1 285 454 zeichnet sich also ebenfalls durch einen relativ großen Aufwand bei nur mäßigem Wirkungsgrad aus.

Der vorliegenden Erfindung liegt daher die Aufgabe zugrunde, eine Filtervorrichtung der eingangs genannten Art zu schaffen, die mit verhältnismäßig einfachen Mitteln eine höhere Filterwirkung aufgrund einer verbesserten Reinigung des umlaufenden endlosen Filterbandes erlaubt.

Diese Aufgabe wird erfindungsgemäß dadurch gelöst, daß die Reinigungsstation mindestens eine Umlenkwalze enthält, über die das Filterband geführt ist und die auf der Außenseite ihres Mantels mit Rippen versehen ist, die das Filterband über dessen gesamte Breite in der Querrichtung dehnen.

Die erfindungsgemäße Lösung zeichnet sich durch eine denkbar einfache, aber dennoch höchst wirkungsvolle Konstruktion aus. Zusätzliche Antriebe für Streckwalzen zum Aufweiten der Sieb- bzw. Filteröffnungen in Förderrichtung des Filterbandes oder Spannrahmen für das Aufweiten der Sieb- bzw. Filteröffnungen quer zur Förderrichtung des Filterbandes sind nicht erforderlich.

Insbesondere erlaubt die erfindungsgemäße Lösung die Ausbildung verhältnismäßig feiner Filteröffnungen mit der Folge, daß auf dem Filterband ständig eine Lage von abgesetzten Feststoffen gebildet wird, die im Bereich des Obertrums des im Bereich der Flüssigkeit die Wirkung eines zusätzlichen Filters hat. Gleichzeitig wird jedoch ein Dichtsetzen bzw. Verstopfen der Filteröffnungen durch die erfindungsgemäßen Maßnahmen wirkungsvoll vermieden. Zusätzliche Saug-, Druckluft- oder Wascheinrichtungen sind nicht erforderlich.

Bevorzugte konstruktive Weiterbildungen der Erfindung sind in den Ansprüchen 2 bis 12 beschrieben, wobei sich die Lösung gemäß Anspruch 12, nämlich die zusätzliche Anordnung eines gegen das Förderband im Bereich der aufgeweiteten Filteröffnungen schlagenden bzw. klopfenden Reinigungserkzeuges als besonders wirkungsvoll erwiesen hat. Durch dieses mechanische Reinigungswerkzeug werden etwaige Feststoffe aus den aufgeweiteten Filteröffnungen restlos entfernt.

Auch die Maßnahmen gemäß den Ansprüchen 2 bis 11 tragen zu einer Erhöhung der Filterwirkung bei, wobei auch der beanspruchte Aufbau des Filterbandes eine gewisse Rolle für die Reinigungsleistung spielt. Dies gilt insbesondere für die im Anspruch 6 beanspruchten Klemmleisten und deren Zusammenwirkung mit dem im Anspruch 2 beanspruchten elastischen Abstreifer und der im Anspruch 3 beanspruchten Schürze.

Ausführungsbeispiele der Erfindung werden nachfolgend anhand der Zeichnungen näher erläutert. Es zeigen:

Figur 1 eine Filtervorrichtung in stark vereinfachter Seitenansicht bzw. im Längsschnitt,

Figur 2 eine Einzelheit der Vorrichtung gemäß Fig. 1 im Bereich der Reinigung eines Filter-Bandes,

Figur 3 eine weitere Einzelheit der Vorrichtung gemäß Fig. 1 im Querschnitt, bei stark vergrößertem Maßstab,

Figur 4 eine Einzelheit über die Ausbildung des Filter-Bandes im Querschnitt, bei stark vergrößertem Maßstab,

Figur 5 eine Einzelheit der Filtervorrichtung, nämlich die Randausbildung desselben, im Querschnitt bei gegenüber Fig. 1 vergrößertem Maßstab,

Figur 6 einem Ausschnitt des Filter-Bandes im Grundriß,

Figur 7 eine Einzelheit, nämlich einen Umlenkbereich für das Filter-Band im Querschnitt desselben,

Figur 8 die Anordnung von Filteröffnungen im Filter-Band bei stark vergrößertem Maßstab,

Figur 9 die Filteröffnungen gemäß Fig. 8 bei geometrischer Verformung derselben,

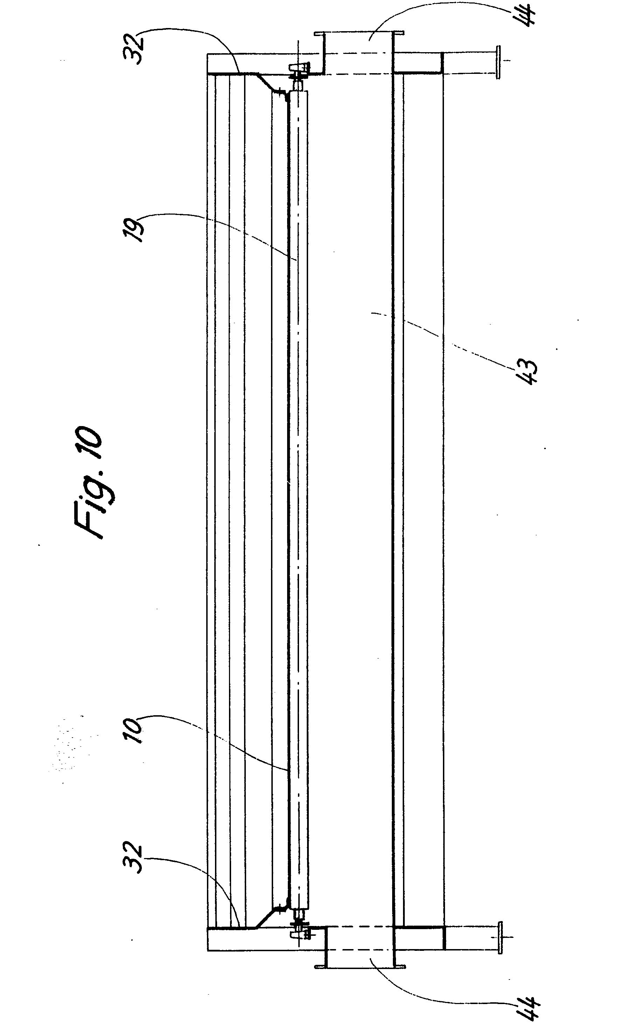

Figur 10 einen Querschnitt durch die Filtervorrichtung gemäß Fig. 1,

Figur 11 eine Einzelheit in bezug auf die Führung des Filter-Bandes als Alternative zu Fig. 1.

Die vorliegend als Ausführungsbeispiel dargestellte Filtervorrichtung ist primär für den Einsatz im Betrieb einer Rübenzuckerfabrik bestimmt, also zum Reinigen bzw. Filtern von Schwemmstrom-Wasser mit feinen Feststoffen, wie Sand und organischen Bestandteilen.

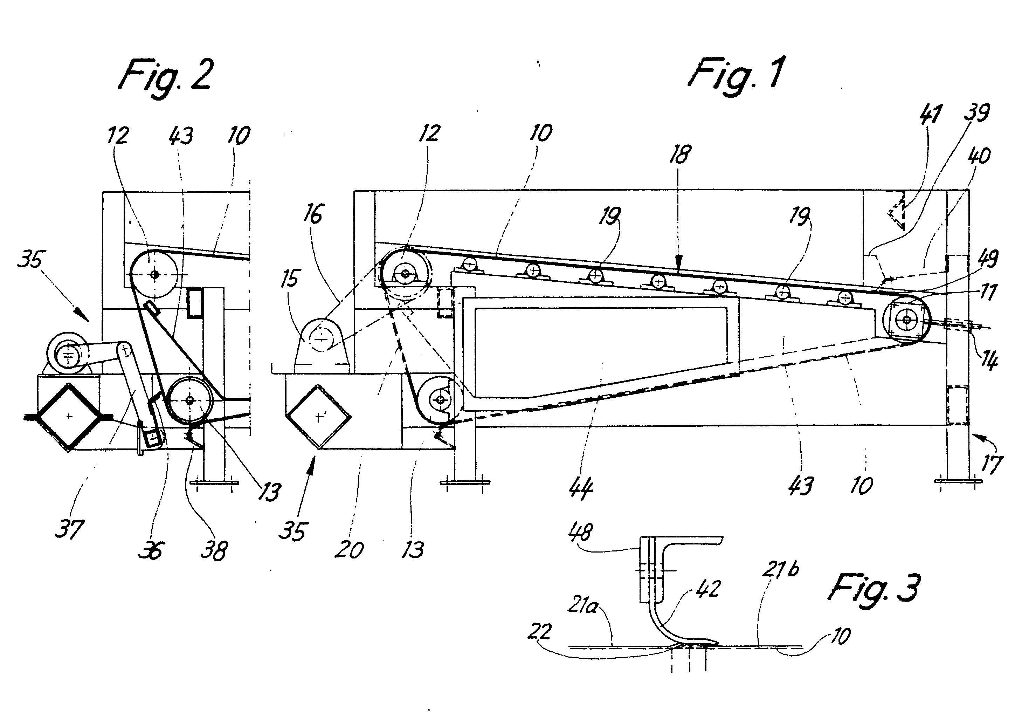

Eine Filterfläche der Vorrichtung wird dabei durch ein endloses Filter-Band 10 gebildet. Dieses wird gemäß Fig. 1 über drei Umlenkwalzen 11, 12, 13 geführt, die in den Ecken eines Dreiecks angeordnet sind. Das Filter-Band 10 erhält dadurch in Seitenansicht eine annähernd dreieckförmige Gestalt. Die Umlenkwalze 11 ist zugleich als Spannwalze mit einer Spannvorrichtung 14 ausgebildet. Der Antrieb des ständig umlaufendes Filter-Bandes 10 wird durch die Umlenkwalze 12 bewirkt, die ihrerseits durch einen Motor 15 über einen Riementrieb 16 angetrieben ist. Die Umlenkwalzen 11, 12, 13 sind im übrigen in einem Traggestell 17 gelagert.

Ein sich zwischen den Umlenkwalzen 11 und 12 erstreckender Obertrum 18 des Filter-Bandes 10 wirkt als Siebfläche. Um die dabei auftretenden Belastungen ohne nennenswerte Verformung aufnehmen zu können und ein Durchhängen des Obertrums 18 zu vermeiden, ist dieser durch eine Mehrzahl von unterseitig angeordneten Stützwalzen 19 geführt und unterstützt.

Außerhalb des Bereichs der vorstehenden Siebfläche wird das Filter-Band 10 gereinigt. Bei dem vorliegenden Ausführungsbeispiel sind dem zwischen den Umlenkwalzen 12, 13 geführten Reinigungstrum 20 im einzelnen noch zu erläuternde Reinigungsaggregate zugeordnet. Der Reinigungstrum 20 ist durch die Anordnung der Umlenkwalzen 12, 13 so geführt, daß in diesem Bereich das Filter-Band 10 etwas aus der Vertikalen herausgeführt ist, so daß die beim Reinigungsprozeß anfallenden Feststoffe frei nach unten fallen können.

Das Filter-Band 10 ist in besonderer Weise ausgebildet. Es besteht aus einem elastisch dehnbaren Werkstoff, insbesondere Kunststoff. Das Filter-Band 10 besteht aus mehreren, im Umlaufrichtung nebeneinanderliegenden Bahnen 21a, 21b, 21c. Diese sind so relativ zueinander angeordnet, daß sich zwischen benachbarten Bahnen 21a, 21b.. eine Überlappung 22 ergibt.

Jede Bahn 21a, 21b.. wiederum besteht im vorliegenden Fall aus einzelnen rechteckigen Matten 23 von angemessener Größe. Die Matten 23 sind in Umlaufrichtung lösbar miteinander verbunden, so daß jede Matte 23 erforderlichenmalls individuell ausgewechselt werden kann. Beim vorliegenden Fall sind gemeinsame, quergerichtete Stoßstellen 27, 28 für die Matten 23 aller Bahnen 21a, 21b.. vorgesehen. Die Stoß- und Verbindungsstellen 27, 28 der Matten 23 werden hier durch Klemmleisten 24, 25 gebildet, die die einander zugekehrten Ränder aufeinanderfolgender Matten 23 erfassen und durch Formschluß sowie durch Klemmwirkung miteinander verbinden. Zu diesem Zweck ist jeweils zu beiden Seiten der Matten 23 eine Klemmleiste 24 bzw. 25 angeordnet. Beide Klemmleisten 24, 25 werden durch eine von oben bedienbare Verbindungsschraube 26 erfaßt und zusammengehalten.

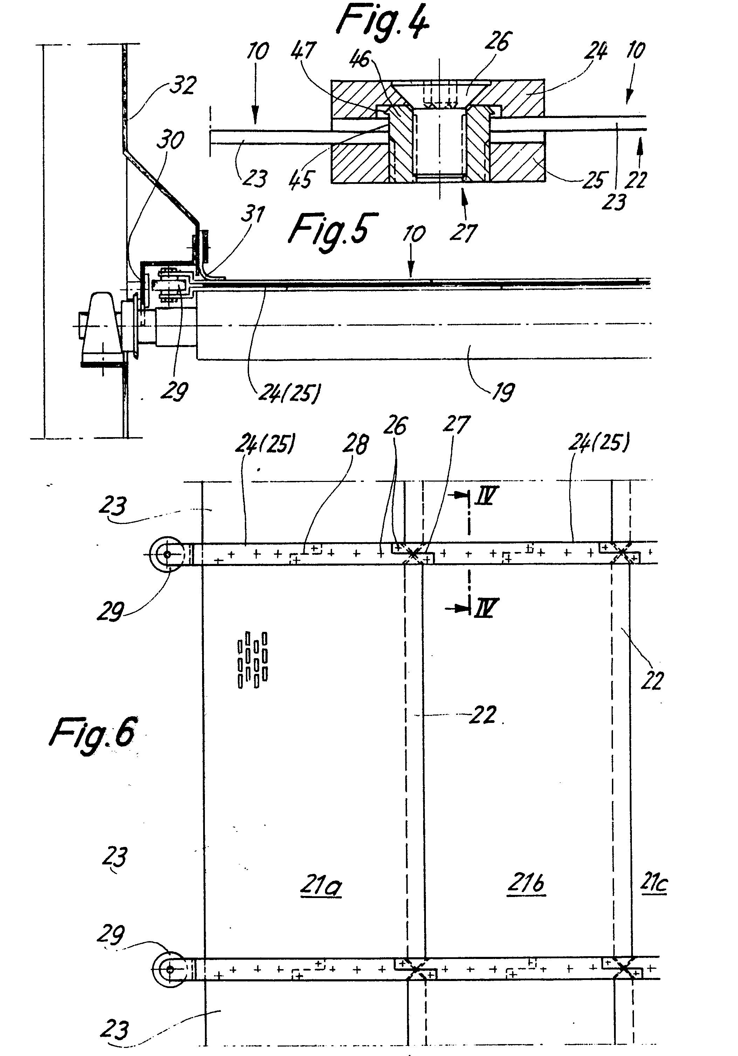

Zur Bildung einer leicht herstellbaren, dauerhaften Verbindung zwischen den einzelnen Matten 23 sind diese an den einander zugekehrten Rändern im Bereich einer dort ebenfalls gebildeten Überdeckung mit Löchern 45 versehen. Diese werden unter Aufweiten über einen Haltezapfen 46 der Klemmleisten 24, 25 gedrückt und dadurch fixiert bzw. vorfixiert. Das obere, freie Ende dieser Haltezapfen 46 ist mit einer widerhakenähnlichen Verbreiterung 47 ausgebildet, über die die Matten 23 unter Aufweiten der Löcher 45 gedrückt werden. Wie aus Fig. 4 ersichtlich, kommen in diesem Bereich je zwei Matten 23 mit den Rändern übereinander zu liegen. Der Haltezapfen 46 ist beispielsweise mit Gewinde in der unteren Klemmleiste 25 verankert. Eine mit Innengewinde versehene Bohrung in dem Haltezapfen 46 nimmt die Verbindungsschraube 26 auf, wodurch die Klemmleisten 24, 25 unter Ausübung eines erheblichen Klemmdruckes gegeneinander bzw. gegen die Matten 23 gedrückt werden.

Die Klemmleisten 24, 25 bestehen aus einzelnen Abschnitten, jeweils mit einer Länge, die der Breite einer Bahn 21a, 21b.. entspricht. Im vorliegenden Fall sind die Abschnitte der jeweils oben liegenden Klemmleisten 24 im Bereich der Überlappung 22 mit einer ebenfalls überlappend ausgebildeten Stoßstelle 27 versehen. Hierzu versetzt sind Stoßstellen 28 der unteren Klemmleisten 25 vorgesehen.

Die auf diese Weise über die gesamte Breite des Filter-Bandes 10 durchgehenden Klemmleisten 24, 25 bewirken eine Stabilisierung des Filter-Bandes 10 und zugleich eine Führung im seitlichen Bereich. Zu diesem Zweck sind an den freien, über das Filter-Band 10 hinwegstehenden Enden der Klemmleisten 24, 25 Stützrollen 29 angeordnet, die an einer aufrechten seitlichen Führungsschiene 30 der Vorrichtung im Bereich des Obertrums 18 Anlage erhalten. Wie aus Fig. 5 ersichtlich, sind diese Stützrollen 29 außerhalb des Filterbereichs angeordnet, der seitlich durch eine elastische Begrenzung in Gestalt eines auf dem Filter-Band 10 aufliegenden Dichtlappens 31 begrenzt ist. Dieser Dichtlappen 31 wiederum ist an einer hier nach innen vorspringenden Seitenwand 32 angeordnet, die ihrerseits den Raum bzw. Bereich für die Aufnahme der zu reinigenden Flüssigkeit begrenzt.

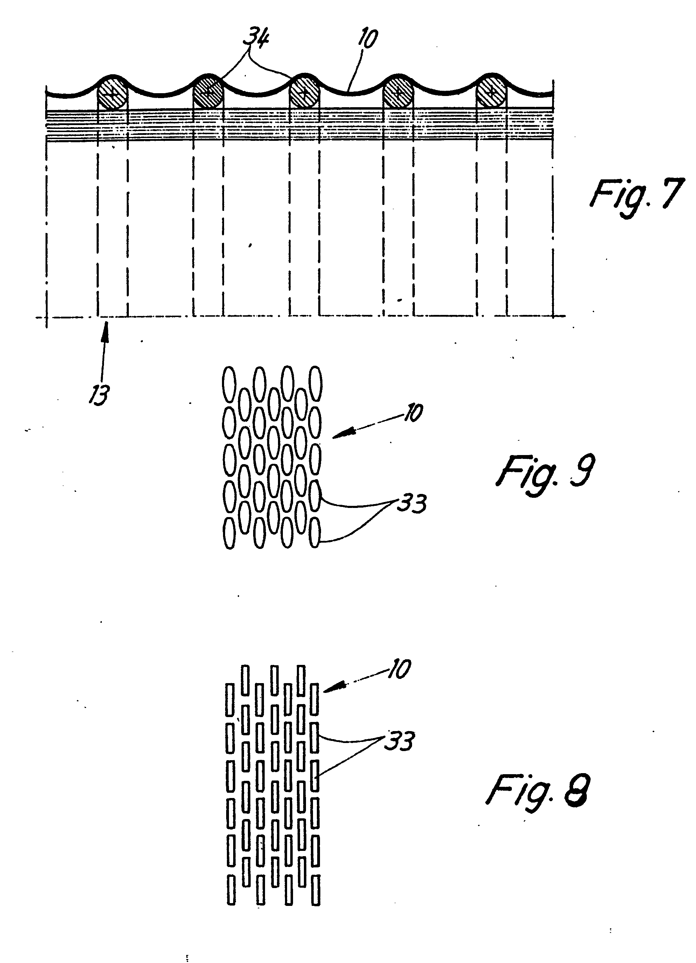

Das Filter-Band 10 kann mit verhältnismäßig kleinen Filteröffnungen 33 ausgestattet sein. Diese sind im vorliegenden Fall (Fig. 8) rechteckig ausgebildet und erstrecken sich in Längsrichtung, also in Bewegungsrichtung des Filter-Bandes 10. Die in Reihen angeordneten Filteröffnungen 33 sind versetzt bzw. « auf Lücke » zueinander angeordnet. Dadurch und durch die Materialeigenschaft des Filter-Bandes 10 ist eine Verformung der Filteröffnungen 33 im Sinne von Fig. 9 möglich, nämlich durch Querdehnen des Filter-Bandes 10. Eventuell in den feinen Filteröffnungen 33 eingeklemmte Feststoffpartikel können dadurch entfernt werden, insbesondere in Verbindung mit einem Reinigungsaggregat 35.

Die Querdehnung des Filter-Bandes 10 im vorstehenden Sinne erfolgt im Bereich der Umlenkwalze 13, die auf ihrem Mantel mit ringförmig angeordneten Rippen 34 versehen ist. Die Rippen 34 bestehen im vorliegenden Fall aus aufgeschweißten Ringen aus Rundmaterial. Alternativ können die Rippen 34 schraubenförmig angeordnet sein, wodurch bewirkt ist, daß das Filter-Band 10 während der sich wiederholenden Umläufe in verschiedenen Bereichen über die Breite gesehen gespannt bzw. gereckt wird.

Infolge der Längsspannung des Filter-Bandes 10 ergibt sich die aus Fig. 7 ersichtliche Querschnittsform des Filter-Bandes 10 im Bereich der Umlenkwalze 13, mit der Folge, daß die Filteröffnungen 33 im Sinne von Fig. 9 aufgeweitet werden. Die Filteröffnungen 33 können dadurch kleinste Breitenabmessungen, beispielsweise herab bis zu 0,1 mm, aufweisen.

Ein dem Reinigungstrum 20 zugeordnetes Reinigungsaggregat 35 umfaßt im vorliegenden Fall eine dem Reinigungstrum 20 zustellbare Reinigungsleiste 36. Diese wird derart angetrieben, daß sie zu dem Filter-Band 10 eine Relativbewegung ausführt, derart, daß dieses Reinigungswerkzeug klopfend bzw. schlagend an das Filter-Band 10 heranbewegt wird. Zu diesem Zweck ist ein Kurbeltrieb 37 für die Bewegung der Reinigungsleiste 36 vorgesehen.

In Bewegungsrichtung nachgeordnet ist ein feststehender, elastischer Abstreifer 38, der sich ebenfalls über die gesamte Breite des Filter-Bandes 10 erstreckt. Dieser aus elastischem Material bestehende Abstreifer 38 liegt ständig an dem sich bewegenden Filter-Band 10 an. Durch einen gewissen Anpreßdruck werden im Bereich der aufgeweiteten Filteröffnungen 33 in diesen sitzende Feststoffpartikel herausgezogen, insbesondere Fäden etc.

Zusätzlich kann in diesem Bereich eine im einzelnen nicht dargestellte chemische Reinigung, also eine Behandlung des Filter-Bandes 10 mit geeigneten Chemikalien, erfolgen.

Die Filterfläche des Filter-Bandes 10, nämlich der Obertrum 18, findet jeweils Aufnahme in einem nach oben offenen Behälter, der eintrittsseitig durch die geneigte Anordnung des Obertrums 18 eine größere Tiefe aufweist. Hier wird die Flüssigkeit über einen Überlauf 39 zugeführt. Dem Überlauf 39 wiederum ist eine sich quer erstreckende Auffangrinne 40 vorgeordnet, in der gegebenenfalls vorhandene Energie des zuströmenden Wassers vernichtet wird. Gleiche Aufgabe hat auch ein oberhalb der Auffangrinne 40 angeordnetes Prallblech 41. Durch den Überlauf 39 in Verbindung mit der Seitenwand 32 und dem Obertrum 18 wird so ein Behälter für die Aufnahme der zu reinigenden Flüssigkeit geschaffen, aus dem die Filterfläche durch fortlaufende Bewegung des Filter-Bandes 10 ständig herausbewegt wird.

Figur 3 zeigt ein Detail des Filter-Bandes 10 im Bereich der Überlappungen 22. Um den Eintritt von Feststoffpartikeln in den Bereich zwischen den einander überlappenden Bahnen 21a, 21b.. zu vermeiden, ist hier ein elastischer Niederhalter 42 oberhalb des Filter-Bandes 10 jeweils im Bereich der Überlappungen 22 angeordnet. Der lappenartige bzw. streifenförmige Niederhalter 42 ist oberhalb des Filter-Bandes 10 in entsprechenden Halteschienen 48 verankert, derart, daß der bogenförmig um 90° umgelenkte Niederhalter 42 mit einem entsprechenden Anpreßdruck im Bereich der Überlappung 22 auf dem Filter-Band 10 aufliegt. Relativanordnung und Abmessungen des Niederhalters 42 sind so gewählt, daß die im Bereich der Überlappung 22 gebildete freie Stufe überdeckt ist.

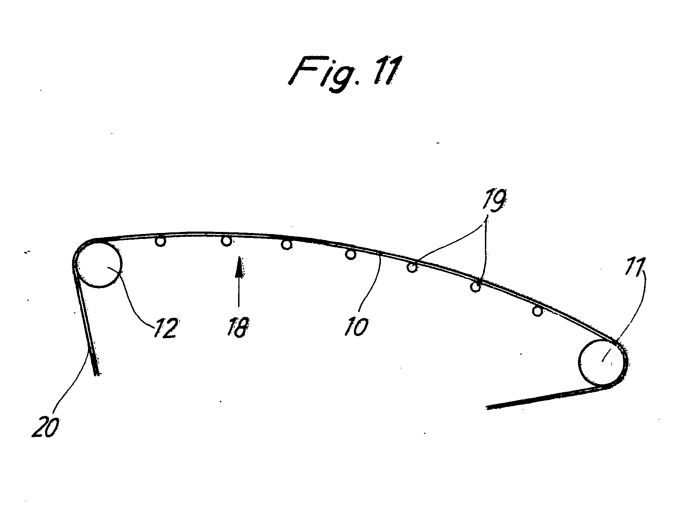

Dem gleichen Thema dient die Ausgestaltung gemäß Fig. 11, nämlich die Anordnung der Stützwalzen 19 längs eines Bogens. Dadurch wird das Filter-Band 10 im Bereich des Obertrums 18 polygonartig geführt. Die freiliegenden Abschnitte des Filter-Bandes 10 erhalten dadurch eine höhere Spannung, so daß die einander überlappenden Ränder der Bahnen 21a, 21b.. mit größerer Anpreßkraft aneinanderliegen und den Eintritt von Feststoffen verhindern.

Unterhalb des nahezu gesamten Obertrums 18 wird ein großräumiger Behälter 43 für die Aufnahme der gereinigten Flüssigkeit gebildet. Aus diesem kann das Wasser über vorzugsweise beidseits angeordnete große Austrittsöffnungen 44 abgeführt werden.

Unterhalb der Auffangrinne 40, nämlich im Bereich des Überlaufs 39, ist eine elastische, auf dem Filter-Band 10 aufliegende Schürze 49 gebildet, die im wesentlichen in gleicher bzw. ähnlicher Weise ausgebildet ist wie der Dichtlappen 31 im Bereich der Seitenwand 32. Aufgabe dieser Schürze 49 ist einmal die Abdichtung des hier gebildeten « Bahälters » zur Aufnahme der zu reinigenden Flüssigkeit auf der « Talseite » des Filter-Bandes 10. Zum anderen hat die fest angeordnete, quer zum Filter-Band 10 gerichtete Schürze 49 die Funktion eines weiteren Reinigungselements. Eventuell auf bzw. an dem Filter-Band 10 in diesem Bereich noch haftende Feststoffe werden hier entfernt.

Die in fester Relativstellung angeordneten Reinigungselemente, insbesondere der Abstreifer 38 sowie die vorgenannte Schürze 49, werden ihrerseits permanent von den aufgefangenen Rückständen befreit, und zwar durch die als Erhöhung auf dem Filter-Band 10 angeordneten Klemmleisten 24. Diese werden entsprechend der Länge der Matten 23 aufeinanderfolgend an dem Abstreifer 38 sowie der Schürze 49 vorbeigeführt, mit der Folge, daß hier abgelagerte Feststoffteile durch die Klemmleisten 24 mitgenommen werden.

**Ansprüche**

1. Vorrichtung zum Filtern von Feststoffe enthaltenden Flüssigkeiten, insbesondere zum Filtern von Wasser eines Schwemmstroms für den Transport von Zuckerrüben in einer Rübenzuckerfabrik, mit einem endlosen, umlaufenden Filterband (10) mit Sieb- bzw. Filteröffnungen (33), dessen Obertrum (18) als Siebfläche dient, und mit einer dem Obertrum (18) nachgeordneten Filterband-Reinigungsstation, in deren Bereich das Filterband unter Aufweiten der Sieb- bzw. Filteröffnungen dehnbar ist, dadurch gekennzeichnet, daß die Reinigungsstation mindestens eine Umlenkwalze (13) enthält, über die das Filterband (10) geführt ist und die auf der Außenseite ihres Mantels mit Rippen (34) versehen ist, die das Filterband (10) über dessen Gesamtbreite in der Querrichtung dehnen.

2. Vorrichtung nach Anspruch 1, dadurch gekennzeichnet, daß im Bereich der Querdehnung des Filterbandes (10), also im Bereich der Umlenkwalze (13) an dem Filterband (10) ein Reinigungswerkzeug anliegt, insbesondere ein elastischer Abstreifer (38).

3. Vorrichtung nach Anspruch 1 oder 2, wobei das Obertrum (18) in Transportrichtung ansteigend geführt ist, dadurch gekennzeichnet, daß an der Eintrittsseite des zu reinigenden Wassers eine quergerichtete, dichtend auf dem Filterband (10) aufliegende Schürze (49) als Abdichtung für das zu reinigende Wasser und zugleich als weiteres Reinigungselement angeordnet ist.

4. Vorrichtung nach einem der Ansprüche 1 bis 3, dadurch gekennzeichnet, daß das Filterband (10) aus zwei oder mehreren nebeneinander liegenden Bahnen (21a, 21b, 21c) besteht.

5. Vorrichtung nach einem der Ansprüche 1 bis 4, dadurch gekennzeichnet, daß das Filterband (10) aus einzelnen, insbesondere rechteckigen Matten (23) besteht, vorzugsweise der Art, daß jede Bahn (21a, 21b..) aus einer Anzahl von in Umlaufrichtung aufeinanderfolgenden und lösbar miteinander verbundenen Matten (23) gebildet ist.

6. Vorrichtung nach Anspruch 5, dadurch gekennzeichnet, daß die Matten (23) durch quer zum Filterband (10) sich erstreckende, insbesondere durchgehende Klemmleisten (24, 25) oder dergleichen lösbar miteinander verbunden sind.

7. Vorrichtung nach einem der Ansprüche 1 bis 6, dadurch gekennzeichnet, daß das aus elastischem Werkstoff bestehende Filterband (10) in Längsrichtung desselben gerichtete, längliche, insbesondere etwa rechteckige Filteröffnungen (33) aufweist, die vorzugsweise in Reihen angeordnet sind und versetzt zueinander liegen.

8. Vorrichtung nach einem der Ansprüche 1 bis 7, dadurch gekennzeichnet, daß der die Filterfläche bildende Obertrum (18) durch eine Mehrzahl von im Abstand voneinander polygonartig angeordneten Stützwalzen (19) geführt ist.

9. Vorrichtung nach einem der Ansprüche 1 bis 8, dadurch gekennzeichnet, daß das Filterband (10) mit einer seitlich abstützenden Führung versehen ist, insbesondere mit an einer seitlichen Begrenzung anliegenden Stützrollen (29) mit vertikaler Drehachse.

10. Vorrichtung nach einem der Ansprüche 1 bis 9, dadurch gekennzeichnet, daß der Filterbereich des Obertrums (18) seitlich mit einer elastischen Begrenzung versehen ist, insbesondere einem an der Seitenwand (32) angeordnetem Dichterlappen (31).

11. Vorrichtung nach einem der Ansprüche 1 bis 10, dadurch gekennzeichnet, daß an der Eintrittseite des zu reinigenden Wassers, bei schräg ansteigendem Obertrum (18) im Bereich der Talseite, eine dem Filterband (10) vorgeordnete und quer verlaufende Auffangrinne (40) für das zu reinigende Wasser angeordnet ist, vorzugsweise mit einem Prallblech (41)

12. Vorrichtung nach einem oder mehreren der Ansprüche 1 bis 11, dadurch gekennzeichnet, daß im Bereich der Reinigungsstation ein Reinigungswerkzeug, insbesondere eine Reinigungsleiste (36) schlagend bzw. klopfend gegen das Filterband (10) bewegbar ist.

## Claims

1. Apparatus for filtering solids-containing liquids, in particular for filtering water of a flume for conveying sugar beet in a sugar beet factory, having an endless circulating filter band (10) with sieve or filter openings (33), the upper run (18) of which serves as a sieving surface, and having downstream of the upper run (18) a filter band cleaning station in the region of which the filter band is extensible so as to enlarge the sieve or filter openings characterised in that the cleaning station comprises at least one guide roller (13) over which the filter band (10) is guided and which is provided on the outer surface of its jacket with ribs (34) which extend the filter band (10) in the transverse direction over its entire width.

2. Apparatus according to claim 1, characterised in that in the region of the transverse extension of the filter band (10), i.e. in the region of the guide roller (13), a cleaning device, in particular an elastic wiper (38), lies against the filter band (10).

3. Apparatus according to claim 1 or 2, whereby the upper run (18) is upwardly inclined in the conveying direction, characterised in that at the inlet side of the water to be cleaned there is arranged, as a seal for the water to be cleaned and at the same time as a further cleaning element, an apron (49) sealingly engaging the filter band (10).

4. Apparatus according to one of claims 1 to 3, characterised in that the filter band (10) comprises two or more adjacent tracks (21a, 21b, 21c).

5. Apparatus according to one of claims 1 to 4, characterised in that the filter band (10) comprises individual, in particular rectangular mats (23) preferably of the kind such that each track (21a, 21b..) is formed from a number of mats (23) arranged serially in the direction of travel and detachably connected with each other.

6. Apparatus according to claim 5, characterised in that the mats (23) are detachably connected with each other by preferably continuous clamping strips (24, 25) or the like extending transversely with respect to the filter band (10).

7. Apparatus according to one of claims 1 to 6, characterised in that the filter band (10) made of elastic material has lengthwise directed elongate, in particular generally rectangular, filter openings (33) which are preferably arranged in rows and are mutually staggered.

8. Apparatus according to one of claims 1 to 7, characterised in that the upper run (18) forming the filter surface is guided by a plurality of support rollers (19) arranged polygonally in mutually spaced relationship.

9. Apparatus according to one of claims 1 to 8, characterised in that the filter band (10) is provided with a laterally supporting guide, in particular with a support roller (29) having a vertical axis of rotation and engaging a lateral border.

10. Apparatus according to one of claims 1 to 9, characterised in that the filter region of the upper run (18) is provided laterally with an elastic margin, in particular a sealing flap (31) arranged at the side wall (32).

11. Apparatus according to one of claims 1 to 10, characterised in that at the inlet side of the water to be cleaned, on the downward side in steeply ascending upper runs (18), there is arranged in advance of the filter band (10) a transversely extending collecting channel (40) for the water to be cleaned, preferably with a baffle plate (41).

12. Apparatus according to one or more of claims 1 to 11, characterised in that in the region of the cleaning station a cleaning device, in particular a cleaning strip (36) is movably arranged to strike or knock against the filter band (10).

## Revendications

1. Dispositif de filtration de liquides contenant des matières solides, en particulier de filtration de l'eau d'un courant de lavage destiné au transport de betteraves à sucre dans une fabrique de sucre de betterave, comportant une bande filtrante sans fin circulante (10), pourvue d'ouvertures filtrantes (33), dont le brin supérieur (18) joue le rôle de surface filtrante, et un poste de nettoyage de cette bande filtrante, placé en aval du brin supérieur (18) et dans la zone duquel la bande filtrante peut être étendue avec élargissement des ouvertures filtrantes, caractérisé par le fait que le poste de nettoyage comporte au moins un rouleau de renvoi (13) sur lequel passe la bande filtrante (10) et qui est pourvu à sa périphérie de nervures (34) qui étendent la bande filtrante (10) dans la direction transversale sur toute sa largeur.

2. Dispositif selon la revendication 1, caractérisé par le fait que dans la zone d'extension transversale de la bande filtrante (10), c'est-à-dire dans la zone du rouleau de renvoi (13), un outil de nettoyage, en particulier une racle élastique (38), s'appuie sur la bande filtrante (10).

3. Dispositif selon l'une des revendications 1 et 2, dans lequel le brin supérieur (18) s'élève dans la direction de transport, caractérisé par le fait que du côté de l'entrée de l'eau à épurer est placé un tablier (49) dirigé transversalement et s'appuyant sur la bande filtrante (10) qui sert à la fois d'élément d'étanchéité et d'élément supplémentaire de nettoyage.

4. Dispositif selon l'une des revendications 1 à 3, caractérisé par le fait que la bande filtrante (10) est formée de plusieurs bandes (21a, 21b, 21c) juxtaposées.

5. Dispositif selon l'une des revendications 1 à 4, caractérisé par le fait que la bande filtrante (10) est formée de nattes (23) en particulier rectangulaires, de préférence de façon que chaque bande (21a, 21b, ...) soit formée d'un certain nombre de nattes (23) placées bout à bout dans la direction de circulation de la bande filtrante (10) et assemblées de façon à pouvoir être détachées.

6. Dispositif selon la revendication 5, caractérisé par le fait que les nattes (23) sont assemblées par des barrettes serrantes (24, 25) en particulier continues s'étendant perpendiculairement à la bande filtrante (10) ou par des éléments semblables.

7. Dispositif selon l'une des revendications 1 à 6, caractérisé par le fait que la bande filtrante (10), en matière élastique, présente des ouvertures filtrantes (33) allongées, en particulier à peu près rectangulaires, dirigées dans sa direction longitudinale, qui sont de préférence disposées en lignes et en chicane.

8. Dispositif selon l'une des revendications 1 à 7, caractérisé par le fait que le brin supérieur (18) formant la surface filtrante est guidé par une série de rouleaux de support (19) espacés placés aux sommets d'un polygone.

9. Dispositif selon l'une des revendications 1 à 8, caractérisé par le fait que la bande filtrante (10) est pourvue d'un guidage d'appui latéral, en particulier de galets d'appui (29) à axe vertical s'appuyant contre une butée latérale.

10. Dispositif selon l'une des revendications 1 à 9, caractérisé par le fait que la zone filtrante du brin supérieur (18) est pourvue latéralement d'une limitation élastique, en particulier d'une languette d'étanchéité (31) montée sur la paroi latérale (32).

11. Dispositif selon l'une des revendications 1 à 10, caractérisé par le fait que du côté de l'entrée de l'eau à épurer — le brin supérieur (18) s'élevant obliquement dans la zone du côté vallée — en amont de la bande filtrante (10) est placée une rigole réceptrice transversale (40) destinée à recevoir l'eau à épurer et de préférence pourvue d'une plaque formant chicane (41).

12. Dispositif selon l'une des revendications 1 à 11, caractérisé par le fait que, dans la zone du poste de nettoyage, est prévu un outil mobile de nettoyage, en particulier une barrette (36) destinée à frapper la bande filtrante (10).

Fig. 1

Fig. 2

Fig. 3

**Fig.4**

**Fig.5**

**Fig.6**

Fig. 7

Fig. 9

Fig. 8

3

Fig. 10

0 010 747

# Fig. 11